# EUROPÄISCHE PATENTSCHRIFT

(11) **EP 4 094 953 B1**
(45) Veröffentlichungstag und Bekanntmachung des Hinweises auf die Patenterteilung: **23.10.2024**
(21) Anmeldenummer: 22174991.4
(22) Anmeldetag: 24.05.2022
(51) Int. Cl.: B60B 3/00, B60B 15/26

(54) **FAHRZEUGFELGE MIT ANSCHLUSSELEMENT FÜR EINE HALTEVORRICHTUNG ZUR ANBRINGUNG EINER GLEITSCHUTZVORRICHTUNG**
VEHICLE RIM WITH CONNECTION ELEMENT FOR A HOLDING DEVICE FOR MOUNTING AN ANTI-SKID DEVICE
JANTE DE VÉHICULE POURVUE D'ÉLÉMENT DE LIAISON POUR UN DISPOSITIF DE MAINTIEN DESTINÉ À L'APPLICATION D'UN DISPOSITIF ANTIGLISSEMENT

(30) Priorität: 28.05.2021 DE 102021113878
(43) Veröffentlichungstag der Anmeldung: 30.11.2022
(73) Patentinhaber: RUD Ketten Rieger & Dietz GmbH u. Co. KG, 73432 Aalen (DE)
(72) Erfinder: Arrigoni Neri, Marco, 22046 Merone (IT); Farina, Luigi, 23843 Dolzago (IT)
(74) Vertreter: Grünecker Patent- und Rechtsanwälte PartG mbB

(56) Entgegenhaltungen:
- EP-A1- 2 206 615
- EP-A2- 1 160 103
- CN-A- 105 015 286
- DE-A1- 19 814 017
- DE-A1- 3 844 494

## Beschreibung

Die Erfindung betrifft eine Fahrzeugfelge für ein Kraftfahrzeug oder für einen Kraftfahrzeuganhänger, wobei die Fahrzeugfelge eine Befestigungsvorrichtung zur Befestigung der Fahrzeugfelge an einer Radnabe, bzw. an einem Radnabenflansch aufweist.

Fahrzeugfelgen sind bekannterweise Bestandteile von Fahrzeugrädern. Bei widrigen Bedingungen, beispielsweise bei schneebedeckten oder schlammigen Untergründen, kann es erforderlich sein, eine Gleitschutzvorrichtung am Fahrzeugrad zu befestigen. Einige Gleitschutzvorrichtungen werden über den Reifen gezogen. Andere, insbesondere selbstaufziehende Gleitschutzvorrichtungen, werden in der Regel an einer Radschraube oder einer Radmutter befestigt. Die Radschraube oder die Radmutter können dabei Teil einer Befestigungsvorrichtung zur Befestigung der Fahrzeugfelge an der Radnabe bzw. dem Radnabenflansch sein. Im einfachsten Fall ist die Befestigungsvorrichtung der Fahrzeugfelge durch mehrere Löcher gebildet, durch die die Radschrauben hindurchragen können. Alternativ dazu kann die Befestigungsvorrichtung durch ein zentrales Loch für eine Zentralverschlussschraube gebildet sein. Die Befestigung der Gleitschutzvorrichtung erfolgt in der Regel über eine Haltevorrichtung, die mit ihrem einen Ende an einer Radschraube befestigt wird und an ihrem anderen Ende einen Ausleger zum Anbringen der Gleitschutzvorrichtung aufweist. Eine selbstaufziehende Gleitschutzvorrichtung der Anmelderin ist beispielsweise aus der DE 10 2009 004 807 A1 bekannt.

Die DE3844494A zeigt eine gattungsgemässe Fahrzeugfelge.

Eine solche Art der Befestigung ist zwar etabliert. Da die Montage einer Gleitschutzvorrichtung jedoch häufig unter schmutzigen Bedingungen stattfindet, ist es wünschenswert, eine einfache, saubere und schnelle Montage einer Gleitschutzvorrichtung oder einer Haltevorrichtung für eine Gleitschutzvorrichtung zu ermöglichen.

Diese Aufgabe löst die Erfindung mit den Merkmalen des Anspruchs 1.

Weitere Ausführungen der Erfindung sind in den Unteransprüchen offenbart.

Dadurch, dass das Anschlusselement ein integraler, stets vorhandener Teil der Fahrzeugfelge ist, kann die Haltevorrichtung direkt an der Fahrzeugfelge angebracht werden. Die umständliche Montage einer Haltevorrichtung an Komponenten der Befestigungsvorrichtung, die eigentlich für einen anderen Zweck konzipiert sind, kann dadurch entfallen. Die erfindungsgemäße Lösung kann also die Montage einer Haltevorrichtung für eine Gleitschutzvorrichtung erleichtern.

Zusätzlich zur oben genannten Fahrzeugfelge betrifft die Erfindung einen Satz, umfassend eine erfindungsgemäße Fahrzeugfelge und eine Haltevorrichtung, an der eine Gleitschutzvorrichtung anbringbar ist, wobei die Haltevorrichtung verliersicher an dem wenigstens einen Anschlusselement anbringbar ist.

Die erfindungsgemäße Lösung kann durch verschiedene, jeweils für sich vorteilhafte und beliebig miteinander kombinierbare Ausgestaltungen weiter verbessert werden. Auf diese Ausgestaltungen und die mit ihnen verbundenen Vorteile ist im Folgenden eingegangen. Gemäß einer ersten vorteilhaften Ausgestaltung der erfindungsgemäßen Fahrzeugfelge verbleibt das wenigstens eine Anschlusselement dauerhaft an der Fahrzeugfelge.

Erfindungsgemäss ist das wenigstens eine Anschlusselement monolithisch, also einstückig, mit der Fahrzeugfelge als integraler Bestandteil derselben geformt. Mit anderen Worten kann das wenigstens eine Anschlusselement bei der Herstellung der Fahrzeugfelge zusammen mit dieser gebildet werden. Die Fahrzeugfelge und das wenigstens eine Anschlusselement können beispielsweise zusammen durch ein Gussverfahren hergestellt werden. Alternativ dazu kann das Anschlusselement auch in die Felge eingeformt werden, beispielsweise durch ein spanendes Verfahren wie Bohren.

Alternativ zur einstückigen Ausgestaltung kann das wenigstens eine Anschlusselement nach der Herstellung der Fahrzeugfelge dauerhaft mit dieser verbunden werden, beispielsweise durch eine stoffschlüssige Verbindung, insbesondere durch eine Schweißverbindung.

Bei der Anbringung einer Gleitschutzvorrichtung an einer Fahrzeugfelge ist es von Vorteil, wenn die Gleitschutzvorrichtung in einem Mittenbereich der Fahrzeugfelge mit dieser verbunden ist. Hierdurch können Unwuchten im Betrieb der Fahrzeugfelge vermieden werden. Um die zentrale Anbringung der Gleitschutzvorrichtung zu erleichtern, kann das wenigstens eine Anschlusselement innerhalb eines Lochkreises oder eines vom Lochkreis begrenzten Mittenbereichs der Fahrzeugfelge angeordnet sein. Der Lochkreis ist dabei der durch die Löcher zur Durchführung der Radschrauben gebildete Kreis. Dieser wird auch als Lochkranz bezeichnet. Mit anderen Worten kann das wenigstens eine Anschlusselement selbst bereits in der Nähe der Drehachse der Fahrzeugfelge angeordnet sein. Eine an diesem Anschlusselement angebrachte Haltevorrichtung kann also im Bereich der Drehachse positioniert werden. Wenn an dieser Haltevorrichtung eine Gleitschutzvorrichtung montiert wird, kann diese betrieben werden, ohne eine Unwucht zu erzeugen.

In dem Mittenbereich weist die Fahrzeugfelge in der Regel eine Mittenbohrung auf. Die Mittenbohrung liegt zentral in der Fahrzeugfelge, wobei eine Mittenachse der Mittenbohrung koaxial mit der Drehachse der Fahrzeugfelge verläuft, bzw. mit dieser zusammenfällt.

Um eine sichere Verbindung der Fahrzeugfelge mit einer Haltevorrichtung und auch eine sichere Verbindung der Haltevorrichtung mit einer Gleitschutzvorrichtung zu ermöglichen, weist die Fahrzeugfelge bevorzugt zwei oder mehr Anschlusselemente auf, die sich über eine Mittenbohrung der Fahrzeugfelge gegenüberliegend angeordnet sind. Insbesondere können sich die Anschlusselemente diametral über die Drehachse der Felge gegenüberliegen. Eine mit den beiden Anschlusselementen verbundene Haltevorrichtung kann sich dann quer über die Mittenbohrung erstrecken bzw. die Drehachse der Fahrzeugfelge schneiden.

Gemäß einer vorteilhaften Ausgestaltung der Fahrzeugfelge ist das wenigstens eine Anschlusselement als eine Bohrung in der Fahrzeugfelge gebildet. Die Bohrung kann sich insbesondere parallel zur axialen Richtung der Fahrzeugfelge, also parallel zur Drehachse der Fahrzeugfelge, von einer Außenseite der Fahrzeugfelge in diese hinein erstrecken. Die wenigstens eine Bohrung ist dabei von einer Mittenbohrung der Felge und von den Bohrungen, bzw. den Löchern für die Radschrauben zu unterscheiden.

Um eine Haltevorrichtung einfach an einem als Bohrung gebildeten Anschlusselement anschließen zu können, kann die Bohrung mit einem Innengewinde versehen sein. Ein Teil der Haltevorrichtung kann dann durch Einschrauben in die Bohrung mit der Fahrzeugfelge verbunden werden. Alternativ dazu kann die Bohrung auch mit einem Hinterschnitt zum Einsetzen einer Schnellmontagevorrichtung versehen sein. Eine Schnellmontagevorrichtung kann beispielsweise ein Stift mit federgespannten Kugeln am Ende sein.

Alternativ zur Ausgestaltung eines Anschlusselements als Bohrung kann das wenigstens eine Anschlusselement als Vorsprung gebildet sein, der an einer Außenseite der Fahrzeugfelge von der übrigen Fahrzeugfelge hervorspringt. Der Vorsprung kann insbesondere monolithisch mit der übrigen Fahrzeugfelge gebildet sein. Der wenigstens eine Vorsprung springt bevorzugt parallel zur axialen Richtung der Fahrzeugfelge vor, bzw. erstreckt sich entlang einer parallel zur axialen Richtung der Fahrzeugfelge verlaufenden Längsachse.

Gemäß einer einfachen Ausgestaltung kann der wenigstens eine Vorsprung eine im Wesentlichen zylindrische Form und/oder einen im Wesentlichen kreisrunden Querschnitt aufweisen.

Zur Verbindung einer Haltevorrichtung mit dem Vorsprung, kann der Vorsprung eine sich quer zur axialen Richtung der Fahrzeugfelge in den Vorsprung erstreckende Aufnahmeöffnung aufweisen. Die Aufnahmeöffnung erstreckt sich also quer zur Längsachse, entlang der der Vorsprung selbst von der Fahrzeugfelge vorspringt. Die Aufnahmeöffnung kann als Sackloch oder als Durchgangsloch gebildet sein. Die Aufnahmeöffnung kann beispielsweise zur Aufnahme einer Stange der Haltevorrichtung dienen.

Gemäß einer alternativen Ausgestaltung des wenigstens einen Vorsprungs kann der Vorsprung zur Anbringung einer Haltevorrichtung wenigstens eine umlaufende Nut aufweisen. Die Nut kann sich dabei in das Material des Vorsprungs hinein erstrecken. Besonders bevorzugt verläuft die Nut entlang einer Umfangsrichtung, die sich um den Vorsprung erstreckt und quer zur Längsachse des Vorsprungs verläuft.

Bevorzugt weist die Fahrzeugfelge zwei Anschlusselemente auf. Dabei sind bevorzugt entweder beide Anschlusselemente als Bohrungen oder beide Anschlusselemente als Vorsprünge gebildet. Alternativ dazu ist es auch möglich, eines der Anschlusselemente als Bohrung und das andere Anschlusselement als Vorsprung zu bilden.

Der erfindungsgemäße Satz kann dadurch weiter verbessert werden, dass sich die Haltevorrichtung in einem an der Fahrzeugfelge montierten Zustand an einer Außenseite der Fahrzeugfelge quer über den Mittenbereich, insbesondere über die Mittenbohrung, der Fahrzeugfelge erstreckt. Besonders bevorzugt erstreckt sich die Haltevorrichtung dabei über die Mitte der Mittenbohrung. Mit anderen Worten kann die Haltevorrichtung die Drehachse der Fahrzeugfelge schneiden.

Bei der bekannten Montage einer Gleitschutzvorrichtung an einem Kopf einer Radschraube, ist stets darauf zu achten, Befestigungselemente, beispielsweise Ausleger, die sich von einer Radschraube aus erstrecken, am Mittenbereich der Fahrzeugfelge zu justieren, damit die Gleitschutzvorrichtung möglichst mittig an der Fahrzeugfelge angebracht ist. Bei einer außerhalb vom Mittenbereich angebrachten Gleitschutzvorrichtung können im Betrieb der Fahrzeugfelge Unwuchten entstehen. Diese Justage erfordert Zeit und einen zusätzlichen Arbeitsschritt. Durch die sich quer über den Mittenbereich erstreckende Haltevorrichtung kann auf eine solche händische Justage eines Auslegers verzichtet werden. Die Position der Haltevorrichtung ist bei der erfindungsgemäßen Fahrzeugfelge nämlich bevorzugt durch die Position oder die Positionen der einen oder der mehreren Anschlusselemente vorgegeben.

Eine einfach gestaltete Haltevorrichtung kann dadurch erhalten werden, dass die Haltevorrichtung als eine Stange gebildet ist, oder eine Stange umfasst.

Die Haltevorrichtung kann einen zur Anbringung einer Gleitschutzvorrichtung ausgestalteten Halteabschnitt und wenigstens einen zur Befestigung an einem Anschlusselement ausgestalteten Befestigungsabschnitt aufweisen. Der Halteabschnitt kann dabei im Wesentlichen zylindrisch geformt sein. Dies kann beispielsweise bei einer Haltevorrichtung der Fall sein, die eine Stange umfasst oder durch eine Stange gebildet ist.

Alternativ dazu kann der Halteabschnitt auch eine andere Struktur aufweisen, welche zur Anbringung einer Gleitschutzvorrichtung geeignet ist. Beispielsweise kann der Halteabschnitt mit einer Öse zum Einhängen eines Teils der Gleitschutzvorrichtung versehen sein.

Um die Montage der Haltevorrichtung am wenigstens einen Anschlusselement zu erleichtern und/oder um die Haltevorrichtung von der Außenseite der Fahrzeugfelge zu beabstandeten, kann die Haltevorrichtung, insbesondere am Befestigungsabschnitt, wenigstens ein wiederholt lösbares Zwischenstück zur Anbringung der Haltevorrichtung an dem wenigstens einen Anschlusselement umfassen.

Das wenigstens eine Zwischenstück kann beispielsweise in ein als Bohrung gebildetes Anschlusselement eingesetzt werden. Ist die Bohrung mit einem Innengewinde versehen, weist das Zwischenstück vorzugsweise ein dazu komplementär geformtes Außengewinde auf. Ist die Bohrung mit einem Hinterschnitt versehen, weist das Zwischenstück bevorzugt eine Schnellmontagevorrichtung zum Verriegeln am Hinterschnitt auf.

Ein am Anschlusselement angebrachtes Zwischenstück kann eine Struktur an der Felge bilden, welche ähnlich der Struktur eines als Vorsprung gebildeten Anschlusselements ist. Der Unterschied zum als Vorsprung gebildeten Anschlusselement besteht dann darin, dass das Zwischenstück wieder von der Fahrzeugfelge lösbar ist.

Bevorzugt weist die Haltevorrichtung zwei sich in einer Längsrichtung der Haltevorrichtung gegenüberliegende und jeweils zur Befestigung an einem Anschlusselement ausgestaltete Befestigungsabschnitte und einen zwischen den beiden Befestigungsabschnitten angeordneten und zur Anbringung einer Gleitschutzvorrichtung ausgestalteten Halteabschnitt auf. Bei dieser Ausgestaltung ist die Fahrzeugfelge folglich vorzugsweise mit zwei Anschlusselementen versehen. Bevorzugt sind die beiden Anschlusselemente dabei sich über die Mittenbohrung der Fahrzeugfelge gegenüberliegend angeordnet. Die Haltevorrichtung schneidet dann bevorzugt mit ihrem Halteabschnitt die Drehachse der Fahrzeugfelge.

Gemäß einer weiteren vorteilhaften Ausgestaltung kann der erfindungsgemäße Satz zusätzlich zu der Fahrzeugfelge und der Haltevorrichtung auch eine zur Anbringung an der Haltevorrichtung ausgestaltete Gleitschutzvorrichtung aufweisen, insbesondere eine selbstaufziehende Schneekette.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend den für einen bestimmten Anwendungsfall notwendigen Eigenschaften der erfindungsgemäßen Fahrzeugfelge durch weitere Merkmale ergänzt werden.

Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: eine perspektivische Darstellung einer Fahrzeugfelge gemäß einer ersten vorteilhaften Ausführungsform;
- Fig. 2: eine vergrößerte Darstellung des Mittenbereichs der Fahrzeugfelge aus Fig. 1;
- Fig. 3: eine vergrößerte Darstellung eines Anschlusselements der Fahrzeugfelge aus Fig. 1;
- Fig. 4 bis 6: die Montage einer Haltevorrichtung an der Fahrzeugfelge aus Fig. 1;
- Fig. 7: die Fahrzeugfelge der Fig. 1 mit einer daran montierten Haltevorrichtung;
- Fig. 8: eine weitere Ausführungsform einer Haltevorrichtung für die Fahrzeugfelge aus Fig. 1;
- Fig. 9: den Mittenbereich einer weiteren Ausführungsform einer erfindungsgemäßen Fahrzeugfelge;
- Fig. 10: die Fahrzeugfelge aus Fig. 9 mit montierter Haltevorrichtung;
- Fig. 11 & 12: weitere Ausführungsformen der erfindungsgemäßen Fahrzeugfelge; und
- Fig. 13: ein beispielhaft dargestelltes Fahrzeugrad mit einer selbstaufziehenden Schneekette als Gleitschutzvorrichtung.

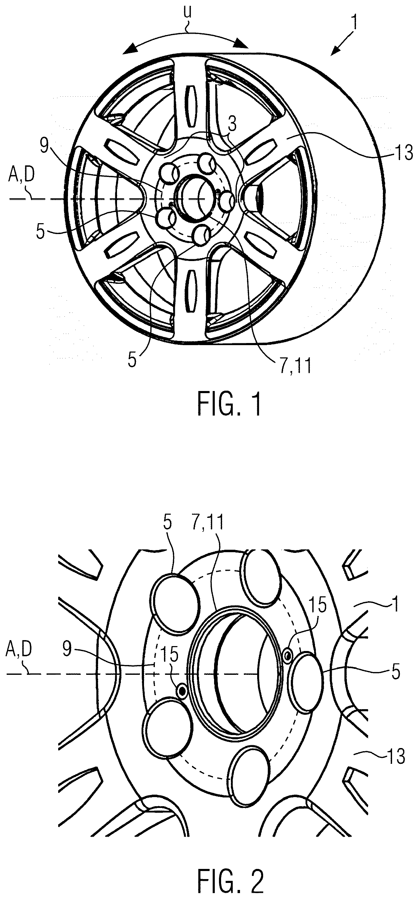

Im Folgenden ist eine erste vorteilhafte Ausführungsform einer erfindungsgemäßen Fahrzeugfelge 1 mit Bezug auf die Fig. 1 beschrieben.

Die Fahrzeugfelge 1 kann an einem Kraftfahrzeug oder an einem Fahrzeug ohne eigenen Antrieb, beispielsweise einem Anhänger, verwendet werden. Insbesondere kann die Fahrzeugfelge 1 an einem Personenkraftwagen (Pkw) verwendet werden. Die Fahrzeugfelge 1 kann zusammen mit einem Reifen ein Fahrzeugrad bilden.

Die Fahrzeugfelge 1 weist eine Drehachse D auf, die eine axiale Richtung Ader Fahrzeugfelge 1 vorgibt. Im Betrieb ist die Fahrzeugfelge 1 um die Drehachse D drehbar am Fahrzeug gehalten. Quer zur axialen Richtung A erstreckt sich eine Umfangsrichtung U der Fahrzeugfelge 1.

Die Fahrzeugfelge 1 ist mit einer Befestigungsvorrichtung 3 versehen, mit der die Fahrzeugfelge 1 an einem Radnabenflansch oder einem anderen Teil der Radnabe eines Fahrzeugs verbunden werden kann. Im einfachsten Fall ist die Befestigungsvorrichtung 3, wie in Fig. 1 dargestellt, durch eine Mehrzahl von Öffnungen 5 gebildet, welche sich parallel zur axialen Richtung A durch die Fahrzeugfelge 1 hindurch erstrecken. Durch diese Öffnungen 5 können Radschrauben (nicht dargestellt) durchgeführt werden, um die Fahrzeugfelge 1 am Nabenflansch des Fahrzeugs zu verschrauben.

Lediglich beispielhaft ist die Fahrzeugfelge 1 mit fünf Öffnungen 5 dargestellt. Alternativ dazu kann die Fahrzeugfelge 1 auch mit jedweder anderen geeigneten Anzahl von Öffnungen 5 versehen sein.

Eine weitere Alternative für eine Befestigungsvorrichtung 3 kann darin bestehen, auf die Öffnungen 5 zu verzichten, und eine Mittenbohrung 7 der Fahrzeugfelge 1 derart auszugestalten, dass die Fahrzeugfelge 1 beispielsweise über eine Zentralverschlussschraube im Bereich der Mittenbohrung 7 mit einem Radnabenflansch verschraubt wird.

Die Öffnungen 5 verlaufen als Lochkreis 9 um die Drehachse D herum. Innerhalb des Lochkreises 9 ist der Mittenbereich 11 der Fahrzeugfelge 1 angeordnet, welcher bei der beispielhaft dargestellten Fahrzeugfelge 1 mit der Mittenbohrung 7 zusammenfällt. Die Drehachse D erstreckt sich durch die Mitte des Mittenbereichs 11.

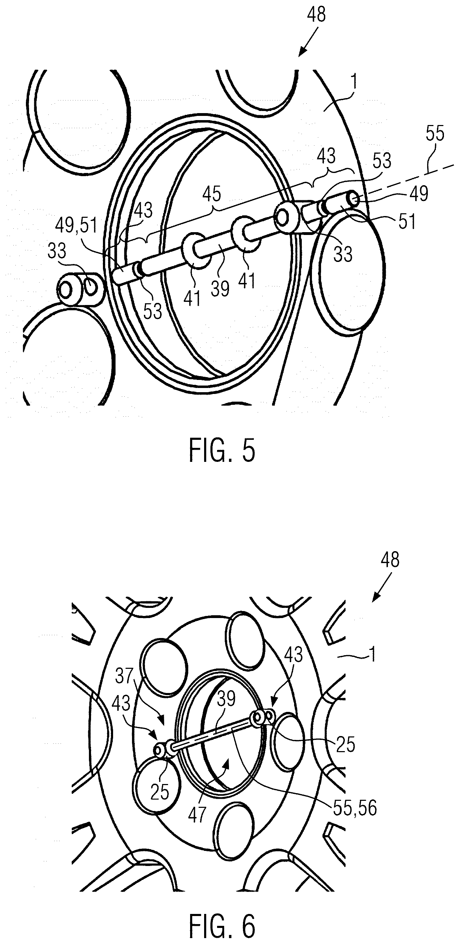

Im Folgenden ist auch Bezug auf die Figuren 2 bis 7 genommen. Dabei werden zunächst anhand der Figuren 1 bis 4 die Anschlusselemente der Fahrzeugfelge 1 und anschließend die Montage einer Haltevorrichtung an den Anschlusselementen mit Bezug auf die Figuren 5 bis 7 erläutert.

An ihrer Außenseite 13, also an der Seite der Fahrzeugfelge 1, welche in einem am Fahrzeug montierten Zustand von außen zugänglich ist, weist die Fahrzeugfelge 1 zwei Anschlusselemente 15 auf.

Die Anschlusselemente 15 sind innerhalb des durch den Lochkreis 9 definierten Bereichs angeordnet, liegen aber außerhalb der Mittenbohrung 7. Die beiden Anschlusselemente 15 liegen sich über die Mittenbohrung 7 und damit auch über die Drehachse D der Fahrzeugfelge 1 diametral gegenüber.

Die Anschlusselemente 15 der ersten Ausführungsform der Fahrzeugfelge 1 sind als Bohrungen 17 gebildet, die sich von der Außenseite 13 der Fahrzeugfelge 1 in diese hinein erstrecken. Bevorzugt erstreckt sich eine Mittenachse 19 jeder Bohrung 17 parallel zur axialen Richtung Ader Fahrzeugfelge 1.

Lediglich beispielhaft ist die erste Ausführungsform der Fahrzeugfelge 1 mit zwei Bohrungen 17 als Anschlusselemente 15 versehen. Bevorzugt sind beide Bohrungen 17 identisch gebildet. Der Einfachheit halber ist im Folgenden nur auf eine Bohrung 17 eingegangen, wobei die beschriebenen Merkmale auch an der anderen Bohrung 17 zu finden sind.

An der Außenseite 13 der Fahrzeugfelge 1 verläuft ein ringförmiger Abstützbereich 21 um die Bohrung 17 herum, an dem sich ein Teil der Haltevorrichtung, insbesondere ein Zwischenstück, abstützen kann.

Die Bohrung 17 ist mit einem Innengewinde 23 versehen, in das ein komplementär ausgestaltetes Gewinde einer Haltevorrichtung eingeschraubt werden kann.

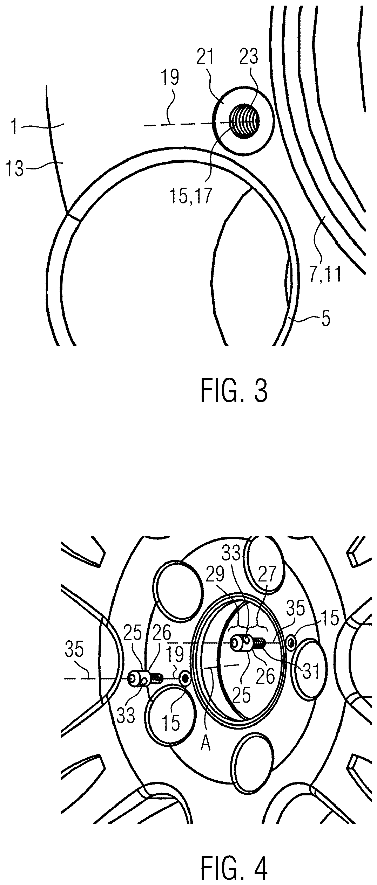

In Figur 4 sind zwei zu einer Haltevorrichtung (hier noch nicht dargestellt) gehörende Zwischenstücke 25 dargestellt, von denen jedes für jeweils eine der als Bohrungen 17 gebildeten Anschlusselemente 15 vorgesehen ist.

Jedes Zwischenstück 25 weist einen Befestigungsabschnitt 27 zum Befestigen an einem Anschlusselement 15 und einen Halteabschnitt 29 zum Halten weiterer Teile der Haltevorrichtung auf.

Um ein Zwischenstück 25 an einem der Anschlusselemente 15 der ersten Ausführungsform der Fahrzeugfelge 1 zu befestigen, weist das Zwischenstück 25 im Befestigungsabschnitt 27 ein Gewinde 31 auf, welches komplementär zum Innengewinde 23 des Anschlusselements 15 geformt ist. Das Zwischenstück 25 kann also durch Einschrauben in die Bohrung 17 an der Fahrzeugfelge 1 befestigt werden. Im montierten Zustand des Zwischenstücks 25 kann eine Schulter 26 des Zwischenstücks 25 am Abstützbereich 21 der Fahrzeugfelge 1 anliegen.

Im Halteabschnitt 29 ist jedes Zwischenstück 25 mit einer Aufnahmeöffnung 33 versehen, welche sich quer zur axialen Richtung A durch das Zwischenstück 25 erstreckt. Die Aufnahmeöffnung 33 kann als Sackloch oder Durchgangsöffnung gebildet sein.

Die Zwischenstücke 25 sind insgesamt schraubenförmig, wobei der Halteabschnitt 29 den Schraubenkopf bildet. Bei der Montage der Zwischenstücke 25 und in deren montiertem Zustand verlaufen Längsachsen 35 der Zwischenstücke 25 parallel zur axialen Richtung A und koaxial mit den Mittenachsen 19 der Bohrungen 17.

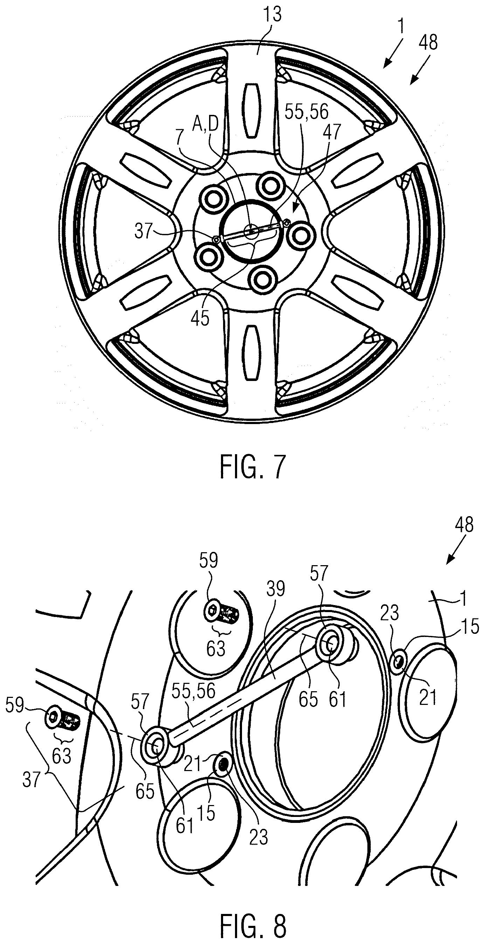

In den Figuren 5 und 7 ist die weitere Montage einer Haltevorrichtung 37 an der Fahrzeugfelge 1 gezeigt. Die Haltevorrichtung 37 der ersten Ausführungsform weist, zusätzlich zu den Zwischenstücken 25, eine Stange 39 und zwei Sicherungsringe 41 auf.

Die Stange 39 weist an jedem ihrer Enden 49 einen Befestigungsabschnitt 43 der Haltevorrichtung 37 und einen zwischen den beiden Befestigungsabschnitten 43 angeordneten und zur Anbringung einer Gleitschutzvorrichtung ausgestalteten Halteabschnitt 45 der Haltevorrichtung 37 auf. Im montierten Zustand 47 der Haltevorrichtung 37 an der Fahrzeugfelge 1, wie er in Figur 6 dargestellt ist, gehören die Zwischenstücke 25 jeweils zu den Befestigungsabschnitten 43 der Haltevorrichtung 37.

Die Stange 39 weist an jedem ihrer Enden 49 jeweils ein Kopfstück 51 auf, welches in die Aufnahmeöffnung 33 eines Zwischenstücks 25 einsetzbar ist.

An jedem Ende 49 der Stange 39 weist diese zwischen dem Kopfstück 51 und der übrigen Stange 39 eine Nut 53 für einen der Sicherungsringe 41 auf. Die Sicherungsringe 41 können derart in den Nuten 53 sitzen, dass sie gegen Verschieben gesichert sind, zumindest entlang einer Längsachse 55 der Stange 39.

Im montierten Zustand 47 sind die Kopfstücke 51 in den Aufnahmeöffnungen 33 der Zwischenstücke 25 angeordnet. Die Sicherungsringe 41, welche in den Nuten 53 sitzen, verhindern dann ein Verschieben der Stange 39 entlang ihrer Längsachse 55. Die Stange 39 und damit die gesamte Haltevorrichtung 37 sind dadurch verliersicher an der Fahrzeugfelge 1 gehalten. Der montierte Zustand 47 einer Haltevorrichtung an der Fahrzeugfelge 1 ist in den Figuren 6 und 7 dargestellt.

Im an der Fahrzeugfelge 1 montierten Zustand 47 der Haltevorrichtung 37 kann eine Gleitschutzvorrichtung, oder zumindest ein Verbindungsteil, welches eine Gleitschutzvorrichtung mit der Haltevorrichtung 37 verbinden kann, am Halteabschnitt 45 der Haltevorrichtung 37 angeschlossen werden.

Im montierten Zustand 47 erstreckt sich die Haltevorrichtung 37 quer über die Mittenbohrung 7 der Fahrzeugfelge 1. Insbesondere schneidet die Haltevorrichtung 37 mit ihrer Längsrichtung 56 die Drehachse D der Fahrzeugfelge 1. Die Längsrichtung 56 kann mit der Längsachse 55 der Stange 39 zusammenfallen.

Durch die oben genannte Anordnung der Haltevorrichtung 37 an der Fahrzeugfelge 1 können Unwuchten im Betrieb der Fahrzeugfelge 1 mit einer Gleitschutzvorrichtung vermieden werden. Die Fahrzeugfelge 1 und die Haltevorrichtung 37 bilden zusammen einen Satz 48.

Im Folgenden ist kurz eine weitere vorteilhafte Ausführungsform einer Haltevorrichtung 37 mit Bezug auf die Fig. 8 beschrieben. Der Kürze halber ist dabei nur auf die Unterschiede zu der zuvor beschriebenen Ausführungsform eingegangen. Die Fahrzeugfelge 1 selbst sowie die Anschlusselemente 15 können mit denen der zuvor beschriebenen Ausführungsform identisch sein.

An ihren Enden 49 weist die Stange 39 Schraubenaufnahmen 57 auf, welche zur Aufnahme von Schrauben 59 ausgestaltet sind. Jede Schraubenaufnahme 57 ist mit einer Durchgangsöffnung 61 versehen, durch die zumindest der Gewindeabschnitt 63 einer Schraube 59 hindurchgeführt werden kann, um am Innengewinde 23 einer Bohrung 17 verschraubt werden zu können.

Zur Montage der Haltevorrichtung 37 wird deren Stange 39 so positioniert, dass Mittenachsen 65 der beiden Schraubenaufnahmen 57 koaxial mit den beiden Mittenachsen 19 der Bohrungen 17 verlaufen. Anschließend können die Schrauben 59 durch die Durchgangsöffnungen 61 geführt und mit den Innengewinde 23 verschraubt werden.

Da die Schraubenköpfe der Schrauben 59 jeweils einen Durchmesser aufweisen, der größer ist als die Weiten der Durchgangsöffnungen 61, gelangen die Schraubenköpfe nicht in die Durchgangsöffnungen 61, sondern drücken die Schraubenaufnahmen 57 gegen die Fahrzeugfelge 1, insbesondere gegen die Abstützbereiche 21.

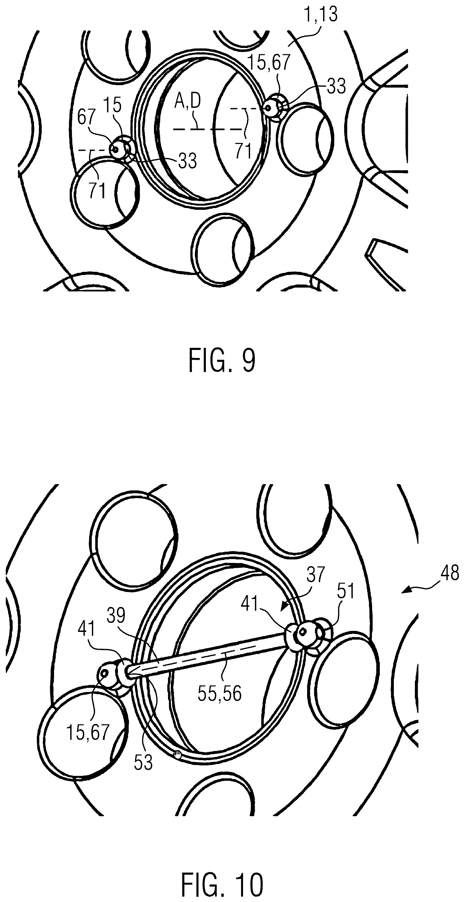

Im Folgenden ist kurz auf eine weitere Ausführungsform einer erfindungsgemäßen Fahrzeugfelge 1 und einer dazugehörigen Haltevorrichtung 37 mit Bezug auf die Figuren 9 und 10 eingegangen. Auch hier ist, der Kürze halber, nur auf die Unterschiede zu den zuvor beschriebenen Ausführungsformen eingegangen.

Die Fahrzeugfelge 1 der zweiten Ausführungsform weist Anschlusselemente 15 auf, welche als von der übrigen Fahrzeugfelge 1 nach außen vorspringende Vorsprünge 67 gebildet sind.

Die Vorsprünge 67 können monolithisch, also einstückig mit der übrigen Fahrzeugfelge 1 gebildet sein. Beispielsweise können die Vorsprünge 67 zusammen mit der übrigen Fahrzeugfelge 1 in einem Gussverfahren hergestellt werden. Alternativ dazu können die Vorsprünge 67 durch eine Schweißverbindung oder eine andere stoffschlüssige Verbindung dauerhaft mit der übrigen Fahrzeugfelge 1 verbunden sein.

Die Vorsprünge 67 ähneln in Form und Funktion den Halteabschnitten 29 der mit Bezug auf die Figuren 4 bis 7 beschriebenen Zwischenstücke 25.

Wie die Halteabschnitte 29 der Zwischenstücke 25 springen die Vorsprünge 67 von der Außenseite 13 der Fahrzeugfelge 1 vor und erstrecken sich dabei jeweils entlang einer parallel zur axialen Richtung Ader Fahrzeugfelge 1 verlaufenden Längsrichtung 71.

Quer zur Längsrichtung 71 erstreckt sich in jedem der Vorsprünge 67 eine Aufnahmeöffnung 33. Die Aufnahmeöffnungen 33 können als Durchgangsbohrungen oder als Sacklöcher gebildet sein. Vorzugsweise sind die Aufnahmeöffnungen 33 als Durchgangsbohrungen gebildet.

Die beiden Vorsprünge 67 liegen sich diametral über die Drehachse D der Fahrzeugfelge 1 gegenüber. Die beiden Aufnahmeöffnungen 33 sind so angeordnet, dass sie zueinander hinweisend geöffnet sind. Mit anderen Worten sind die Aufnahmeöffnungen 33 koaxial miteinander ausgerichtet.

Die Haltevorrichtung 37, die mit den als Vorsprüngen 67 gebildeten Anschlusselementen 15 verbindbar ist, umfasst eine Stange 39 mit Nuten 53 sowie zwei Sicherungsringe 41.

Zur Montage wird die Stange 39 wird mit ihren Kopfstücken 51 in die Aufnahmeöffnungen 33 eingesetzt und die Sicherungsringe 41 in die Nuten 53 geschoben. Dadurch ist die Stange 39 verliersicher an der Fahrzeugfelge 1 gehalten. Anschließend kann eine Gleitschutzvorrichtung an der Haltevorrichtung 37, insbesondere an deren Stange 39 befestigt werden.

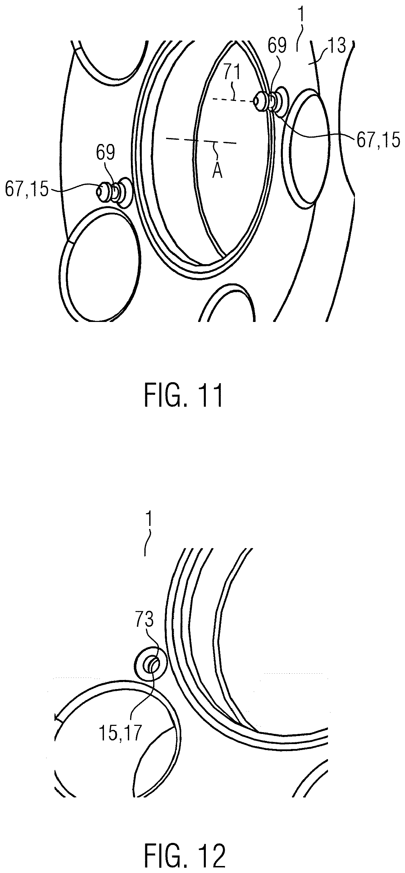

Eine alternative Ausführungsform einer Fahrzeugfelge 1 mit als Vorsprüngen 67 ausgebildeten Anschlusselementen 15 ist in Figur 11 dargestellt.

Die Vorsprünge 67 erstrecken sich, wie bei der zuvor beschriebenen Ausführungsform, jeweils mit einer Längsrichtung 71 von der Außenseite 13 der Fahrzeugfelge 1 weg. Die Längsrichtung 71 verläuft dabei parallel zur axialen Richtung A.

Die Vorsprünge 67 dieser Ausführungsform weisen, statt einer Aufnahmeöffnung 33, jeweils eine umlaufende Nut 69 auf. Die Nuten 69 verlaufen jeweils um die Längsrichtung 71 herum und erstrecken sich in das Material der Vorsprünge 67 hinein.

An diesen Vorsprüngen 67 können Haltevorrichtungen 37 angebracht werden, welche mit einer komplementär zu den Nuten 69 ausgestalteten Befestigungseinrichtung versehen sind. Lediglich beispielhaft sei hier die Möglichkeit genannt, dass eine Haltevorrichtung ähnlich zu der mit Bezug auf die Figur 8 beschriebenen Ausführungsform auf die Vorsprünge 67 gesetzt wird und anschließend Sicherungsringe, beispielsweise Seegerringe, auf die Nuten 69 gesetzt werden, um die Haltevorrichtung an den Vorsprüngen 67 zu halten.

Die Form der Vorsprünge 67 mit den Nuten 69 kann alternativ auch bei Zwischenstücken 25 vorhanden sein, welche in Bohrungen 17 der Fahrzeugfelge 1 einsetzbar sind.

Figur 12 zeigt eine weitere Ausführungsform einer Fahrzeugfelge 1 mit Bohrungen 17, wobei lediglich eine der beiden Bohrungen 17 dargestellt ist.

Im Gegensatz zu den zuvor beschriebenen Bohrungen 17, weisen die Bohrungen 17 dieser Ausführungsform keine Innengewinde auf, sondern sind jeweils mit einem Hinterschnitt 73 versehen. In diese Bohrungen 17 können Zwischenstücke oder Haltevorrichtungen mit entsprechend ausgestalteten Schnellmontagevorrichtungen eingesetzt werden.

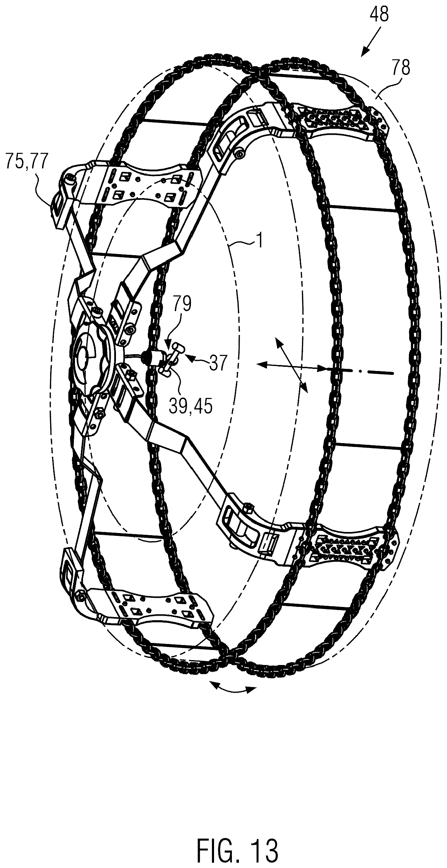

In Figur 13 ist lediglich beispielhaft und auch nur schematisch angedeutet, wie eine Gleitschutzvorrichtung 75, hier beispielhaft als selbstaufziehende Schneekette 77 dargestellt, an einer Fahrzeugfelge 1 (lediglich als Teil eines Fahrzeugreifens 78 angedeutet) an einer erfindungsgemäßen Haltevorrichtung 37 befestigt sein kann.

Die Haltevorrichtung 37 weist einen Halteabschnitt 45 auf, welcher hier lediglich beispielhaft als Teil einer Stange 39 dargestellt ist. An diesem Halteabschnitt 45 kann ein Verbindungsteil 79, beispielsweise ein Haken, der Gleitschutzvorrichtung 75 eingehängt sein.

### Bezugszeichen

- 1: Fahrzeugfelge
- 3: Befestigungsvorrichtung
- 5: Öffnung
- 7: Mittenbohrung
- 9: Lochkreis
- 11: Mittenbereich
- 13: Außenseite
- 15: Anschlusselement
- 17: Bohrung
- 19: Mittenachse
- 21: Abstützbereich
- 23: Innengewinde
- 25: Zwischenstück
- 26: Schulter
- 27: Befestigungsabschnitt
- 29: Halteabschnitt
- 31: Gewinde
- 33: Aufnahmeöffnung
- 35: Längsachse
- 37: Haltevorrichtung
- 39: Stange
- 41: Sicherungsring
- 43: Befestigungsabschnitt
- 45: Halteabschnitt
- 47: montierter Zustand
- 48: Satz
- 49: Stangenenden
- 51: Kopfstücke
- 53: Nut
- 55: Längsachse
- 56: Längsrichtung der Haltevorrichtung
- 57: Schraubenaufnahme
- 59: Schraube
- 61: Durchgangsöffnung
- 63: Gewindeabschnitt
- 65: Mittenachse
- 67: Vorsprung
- 69: Nut
- 71: Längsrichtung
- 73: Hinterschnitt
- 75: Gleitschutzvorrichtung
- 77: selbstaufziehende Schneekette
- 78: Fahrzeugreifen
- 79: Verbindungsteil
- A: axiale Richtung der Fahrzeugfelge
- D: Drehachse der Fahrzeugfelge
- U: Umfangsrichtung der Fahrzeugfelge

## Patentansprüche

1. Fahrzeugfelge (1) für ein Kraftfahrzeug oder für einen Kraftfahrzeuganhänger, wobei die Fahrzeugfelge (1) eine Befestigungsvorrichtung (3) zur Befestigung der Fahrzeugfelge (1) an einer Radnabe aufweist, wobei die Befestigungsvorrichtung (3) eine Mehrzahl an Öffnungen (5) zur Durchführung von Radschrauben aufweist und wobei die Fahrzeugfelge (1), zusätzlich zur Befestigungsvorrichtung (3), wenigstens ein Anschlusselement (15) aufweist, das zum wiederholt lösbaren Anschließen einer Haltevorrichtung (37) für eine Gleitschutzvorrichtung (75) ausgestaltet ist, wobei das wenigstens eine Anschlusselement (15) innerhalb eines durch die Öffnungen (5) gebildeten Lochkreises (9) oder eines vom Lochkreis (9) begrenzten Mittenbereichs (11) der Fahrzeugfelge (1) angeordnet ist,
**dadurch gekennzeichnet, dass**
das wenigstens eine Anschlusselement (15) monolithisch mit der Fahrzeugfelge (1) gebildet ist.

2. Fahrzeugfelge (1) nach Anspruch 1, wobei die Fahrzeugfelge (1) zwei Anschlusselemente (15) aufweist, die sich über eine Mittenbohrung (7) der Fahrzeugfelge (1) gegenüberliegend angeordnet sind.

3. Fahrzeugfelge (1) nach einem der Ansprüche 1 bis 2, wobei das wenigstens eine Anschlusselement (15) als eine Bohrung (17) in der Fahrzeugfelge (1) gebildet ist.

4. Fahrzeugfelge (1) nach einem der Ansprüche 1 bis 3, wobei die wenigstens eine Bohrung (17) mit einem Innengewinde (23) versehen ist.

5. Fahrzeugfelge (1) nach einem der Ansprüche 1 bis 4, wobei das wenigstens eine Anschlusselement (15) als Vorsprung (67) gebildet ist, der an einer Außenseite (13) der Fahrzeugfelge (1) von der übrigen Fahrzeugfelge (1) hervorspringt.

6. Fahrzeugfelge (1) nach Anspruch 5, wobei der Vorsprung (67) wenigstens eine sich quer zu einer axialen Richtung (A) der Fahrzeugfelge (1) in den Vorsprung (67) erstreckende Aufnahmeöffnung (33) aufweist.

7. Fahrzeugfelge (1) nach Anspruch 5 oder 6, wobei der Vorsprung (67) wenigstens eine umlaufende Nut (69) aufweist.

8. Satz (48), umfassend eine Fahrzeugfelge (1) nach einem der Ansprüche 1 bis 7 und eine Haltevorrichtung (37), an der eine Gleitschutzvorrichtung (75) anbringbar ist, wobei die Haltevorrichtung (37) verliersicher an dem wenigstens einen Anschlusselement (15) anbringbar ist.

9. Satz (48) nach Anspruch 8, wobei sich die Haltevorrichtung (37), in einem an der Fahrzeugfelge (1) montierten Zustand (47), an einer Außenseite (13) der Fahrzeugfelge (1) quer über eine Mittenbohrung (7) der Fahrzeugfelge (1) erstreckt.

10. Satz (48) nach Anspruch 8 oder 9, wobei die Haltevorrichtung (37) als eine Stange (39) gebildet ist oder eine Stange (39) umfasst.

11. Satz (48) nach einem der Ansprüche 8 bis 10, wobei die Haltevorrichtung (37) wenigstens ein wiederholt lösbares Zwischenstück (25) zur Anbringung der Haltevorrichtung (37) an dem wenigstens einen Anschlusselement (15) umfasst.

12. Satz (48) nach einem der Ansprüche 8 bis 11, wobei die Haltevorrichtung (37) zwei sich in einer Längsrichtung (56) der Haltevorrichtung (37) gegenüberliegende und jeweils zur Befestigung an einem Anschlusselement (15) ausgestaltete Befestigungsabschnitte (43) und einen zwischen den beiden Befestigungsabschnitten (43) angeordneten und zur Anbringung einer Gleitschutzvorrichtung (75) ausgestalteten Halteabschnitt (45) aufweist.

13. Satz (48) nach einem der Ansprüche 8 bis 12, ferner umfassend eine zur Anbringung an der Haltevorrichtung (37) ausgestaltete Gleitschutzvorrichtung (75), insbesondere eine selbstaufziehende Schneekette (77).

## Claims

1. A vehicle rim (1) for a motor vehicle or a trailer for a motor vehicle, wherein the vehicle rim (1) includes a fastening device (3) for fastening the vehicle rim (1) to a wheel hub, wherein the fastening device (3) includes a plurality of openings (5) for passing through wheel bolts and wherein the vehicle rim (1) includes in addition to the fastening device (3) at least one connecting element (15) which is configured for repeated releasable connection of a retaining device (37) for an anti-skid device (75), the at least one connecting element (15) being arranged within a pitch circle (9) formed by the openings (5) or within a central region (11) of the vehicle rim (1) bounded by the pitch circle (9),
**characterized in that**
the at least one connecting element (15) is formed monolithically with the vehicle rim (1).

2. The vehicle rim (1) according to claim 1, wherein the vehicle rim (1) includes two connecting elements (15) which are arranged opposite to each other via a center bore (7) of the vehicle rim (1).

3. The vehicle rim (1) according to any one of claims 1 to 2, wherein the at least one connecting element (15) is formed as a bore (17) in the vehicle rim (1).

4. The vehicle rim (1) according to any one of claims 1 to 3, wherein the at least one bore (17) is provided with a female thread (23).

5. The vehicle rim (1) according to any one of claims 1 to 4, wherein the at least one connecting element (15) is formed as a projection (67) protruding from the remaining vehicle rim (1) on an outer side (13) of the vehicle rim (1).

6. The vehicle rim (1) according to claim 5, wherein the projection (67) includes at least one receiving opening (33) extending into the projection (67) ransversely to an axial direction (A) of the vehicle rim (1).

7. The vehicle rim (1) according to claims 5 or 6, wherein the projection (67) includes at least one circumferential groove (69).

8. A kit (48), comprising a vehicle rim (1) according to any one of claims 1 to 7 and a retaining device (37) to which an anti-skid device (75) can be attached, wherein the retaining device (37) can be secured against loss to the at least one connecting element (15).

9. The kit (48) according to claim 8, wherein the retaining device (37) extends along an outer side (13) of the vehicle rim (1) transversely across a center bore (7) of the vehicle rim (1) in a state (47) mounted on the vehicle rim (1).

10. The kit (48) according to claims 8 or 9, wherein the retaining device (37) is formed as a rod (39) or comprises a rod (39).

11. The kit (48) according to any one of claims 8 to 10, wherein the retaining device (37) comprises at least one adapter (25) that can be repeatedly detached for attaching the retaining device (37) to the at least one connecting element (15).

12. The kit (48) according to any one of claims 8 to 11, wherein the retaining device (37) includes two fastening portions (43) which oppose each other in a longitudinal direction (56) of the retaining device (37) and which are configured for fastening to a connecting element (15), and a retaining portion (45) interposed between the two fastening portions (43) that is configured for attaching an anti-skid device (75).

13. The kit (48) according to any one of claims 8 to 12, further comprising an anti-skid device (75) configured to be attached to the retaining device (37), in particular a self-tensioning snow chain (77).

## Revendications

1. Jante de véhicule (1) pour un véhicule automobile ou pour une remorque de véhicule automobile, dans laquelle la jante de véhicule (1) comporte un dispositif de fixation (3) pour fixer la jante de véhicule (1) à un moyeu de roue, dans laquelle le dispositif de fixation (3) comporte une pluralité d'ouvertures (5) pour le passage de boulons de roue, et dans laquelle la jante de véhicule (1) comporte, outre le dispositif de fixation (3), au moins un élément de connexion (15) qui est configuré pour connecter de manière amovible et répétée un dispositif de retenue (37) pour un dispositif antidérapant (75), dans laquelle ledit au moins un élément de connexion (15) est agencé à l'intérieur d'un cercle de boulonnage (9) formé par les ouvertures (5) ou d'une zone centrale (11) de la jante de véhicule (1) délimitée par le cercle de boulonnage (9),
**caractérisée en ce que** ledit au moins un élément de connexion (15) est formé de manière monolithique avec la jante de véhicule (1).

2. Jante de véhicule (1) selon la revendication 1, dans laquelle la jante de véhicule (1) comporte deux éléments de connexion (15) qui sont agencés face à face, de part et d'autre d'un alésage central (7) de la jante de véhicule (1) .

3. Jante de véhicule (1) selon l'une des revendications 1 et 2, dans laquelle ledit au moins un élément de connexion (15) est conformé comme un alésage (17) dans la jante de véhicule (1).

4. Jante de véhicule (1) selon l'une des revendications 1 à 3, dans laquelle ledit au moins un alésage (17) est pourvu d'un filetage interne (23).

5. Jante de véhicule (1) selon l'une des revendications 1 à 4, dans laquelle ledit au moins un élément de connexion (15) est conformé comme une protubérance (67) qui ressort du reste de la jante de véhicule (1) sur un côté externe (13) de la jante de véhicule (1).

6. Jante de véhicule (1) selon la revendication 5, dans laquelle la protubérance (67) présente au moins une ouverture de réception (33) qui s'étend dans la protubérance (67) transversalement à une direction axiale (A) de la jante de véhicule (1).

7. Jante de véhicule (1) selon la revendication 5 ou 6, dans laquelle la protubérance (67) comporte au moins une rainure circonférentielle (69).

8. Ensemble (48) comportant une jante de véhicule (1) selon l'une des revendications 1 à 7 et un dispositif de retenue (37) sur lequel peut être monté un dispositif antidérapant (75), dans lequel le dispositif de retenue (37) peut être monté de manière imperdable sur ledit au moins un élément de connexion (15).

9. Ensemble (48) selon la revendication 8, dans lequel le dispositif de retenue (37), dans un état monté (47) sur la jante de véhicule (1), s'étend sur un côté externe (13) de la jante de véhicule (1) transversalement à un alésage central (7) de la jante de véhicule (1).

10. Ensemble (48) selon la revendication 8 ou 9, dans lequel le dispositif de retenue (37) est constitué sous forme d'une barre (39) ou comporte une barre (39).

11. Ensemble (48) selon l'une des revendications 8 à 10, dans lequel le dispositif de retenue (37) comporte au moins une pièce intermédiaire (25) amovible de manière répétée pour monter le dispositif de retenue (37) sur ledit au moins un élément de connexion (15).

12. Ensemble (48) selon l'une des revendications 8 à 11, dans lequel le dispositif de retenue (37) comporte deux sections de fixation (43) qui se font face en direction longitudinale (56) du dispositif de retenue (37) et configurées chacune pour être fixées à un élément de connexion (15), et une section de retenue (45) agencée entre les deux sections de fixation (43) et conçue pour monter un dispositif antidérapant (75).

13. Ensemble (48) selon l'une des revendications 8 à 12, comprenant en outre un dispositif antidérapant (75) configuré pour être monté sur le dispositif de retenue (37), en particulier une chaîne à neige à enroulement automatique (77).
